# EUROPEAN PATENT SPECIFICATION

(11) **EP 1 636 297 B1**
(45) Date of publication and mention of the grant of the patent: **08.08.2007**
(21) Application number: 04752166.1
(22) Date of filing: 12.05.2004
(51) Int. Cl.: C08J 7/14, C08L 59/02, C08K 3/24, C23C 18/24, C25D 5/56

(54) **MODIFIED POLYACETALS FOR PLATING**
MODIFIZIERTE POLYACETALE FÜR DIE METALLABSCHEIDUNG
POLYACETALS MODIFIES DESTINES A L'ELECTRODEPOSITION

(30) Priority: 20.06.2003 US 480416 P; 01.04.2004 US 816151
(43) Date of publication of application: 22.03.2006
(73) Proprietor: E.I. DUPONT DE NEMOURS AND COMPANY, Wilmington, Delaware 19898 (US)
(72) Inventor: SCARAMUZZINO, Pascal, CH-1055 Froideville (CH)
(74) Representative: Morf, Jan Stefan
(86) International application number: PCT/US2004/015071
(87) International publication number: WO 2005/000950

(56) References cited:
- EP-A- 0 279 504
- GB-A- 2 035 335

## Description

### Field of the Invention

This invention relates to the bulk modification of polyacetal for processing into a polyacetal article to be acid-etched and plated, as well as to the polyacetal articles obtained for instance by molding, and the polyacetal articles when etched and plated with one or more of a plating catalyst, an electroless metal plating solution followed by a galvanic process. The invention is specifically concerned with obtaining plated polyacetal articles with superior aesthetic appearance while retaining good plating adhesion and good resistance of the polyacetal to chemical attack.

### Background of Invention

Polyacetals (sometimes referred to as acetal resins) are a class of polyoxymethylene compositions described for example in US Patents 5,318,813, 5,344,882 and 5,286,807. Polyacetal resins are commercialized *inter alia* by E.I. du Pont de Nemours and Company, Wilmington, Delaware, USA under the trademark DELRIN®.

Polyoxymethylene compositions (polyacetals) are generally understood to include compositions based on homopolymers of formaldehyde or of cyclic oligomers of formaldehyde, for example trioxane, the terminal groups of which are end-capped by esterification or etherification, as well as copolymers of formaldehyde or of cyclic oligomers of formaldehyde, with oxyalkylene groups with at least two adjacent carbon atoms in the main chain, the terminal groups of which copolymers can be hydroxyl terminated or can be end-capped by esterification or etherification.

Compositions based on polyoxymethylene of relatively high molecular weight, i.e. 10,000 to 100,000 are useful in preparing semifinished and finished articles by any of the techniques commonly used with thermoplastic materials, e.g. compression molding, injection molding, extrusion, blow molding, rotational molding, melt spinning, stamping and thermoforming. Finished products made from such compositions possess extremely desirable physical properties, including high stiffness, strength, chemical stability and solvent resistance.

It is known that molded articles made of polyacetals, which are highly chemically stable and crystalline, are more difficult to decorate or overmold, and are more particularly difficult to metallize (by vacuum deposition), plate (electroless plating or galvanoplating) or paint than other molded plastic materials.

Generally speaking, plastics are quite stable chemically and molded products thereof made by injection molding or the like have a smooth surface, so that it is difficult to decorate the surface thereof by means of printing, coating, deposition or the like, and it is also difficult to subject the surface to processing such as adhesion by means of adhesives. Because polyacetal resin is particularly low in surface activity, and there is known no appropriate solvent having an affinity for polyacetal, the surface decoration and adhesion thereof is difficult to carry out in practice and, thus polyacetal resins are rarely put to uses requiring such treatments.

However, the application of plastics has diversified recently and higher class usages are frequently required to simultaneously satisfy plural criteria, such as function and appearance or function and adhesion properties. Thus, good surface processability is becoming more important for polyacetals.

The surface processability of polyacetals can be improved to some extent by treatment with an acidic solution or an oxidant solution. Acidic solutions of p-toluenesulfonic acid, camphorsulfonic acid, phosphoric acid, acid ammonium sulfate and the like have been proposed, while as an oxidant solution a chromic acid-sulfuric acid mixture has been proposed. An improved process for electroplating is also provided by immersion of the shaped article into quinoline, pyridine or g-butyrolactone prior to the above-mentioned surface treatment with an acid agent solution.

The object of these treatments is to produce a rough surface and simultaneously form reactive groups on a part of the polyacetal molecule by the oxidizing action of the solutions. However, if it is attempted to enhance the effect of a surface treatment by means of such a procedure, problems arise such as deterioration of the polyacetal resin throughout the whole body, leading to loss of strength, the formation of cracks, or a poor surface finish. On the other hand, if the treatment is carried out utilizing a condition which causes no deterioration of the polyacetal, the effect of the surface treatment tends to be insufficient and a good surface processing cannot be practiced.

When treating polyacetal articles in order to improve their surface processability, substantial problems are encountered in controlling the propensity to activate and roughen the surface via a chemical modification, and in selecting the polyacetal composition in such a way as to retain its initial bulk properties. The difficulty of treating the surface of a polyacetal resin is evidenced by high reject rates, especially when complex shaped parts are immersed in an acidic solution, or poor adhesion of the coating(s). By coating is meant a decorative or functional layer applied onto the acid-etched surface of the molded polyacetal article. Above all, it is desirable to obtain a good adhesion of the coating as well as an excellent surface aesthetic appearance.

The difficulty of metallizing polyacetal articles is for example described in GB-A 2 091 274, which proposed a preliminary surface treatment by acid etching, for instance using a mixture of 30-60 weight% sulfuric acid, 5-30 weight% hydrochloric acid and 65-10 weight% water; or 20-50 weight% sulfuric acid, 30-50 weight% phosphoric acid and 50-0 weight% water. Mixtures of organic and inorganic acids were also envisaged. After the acid etching, the articles were dipped in a neutralizing solution, undercoated with an urethane paint, metallized by cathodic sputtering and painted with a top coat of an acrylic urethane paint or an acrylic ester paint system.

French Patent Specification FR-A-2,703,074 describes the preliminary surface treatment of polyacetal articles to prepare them for plating, by etching with a mixed acid bath of sulfuric, phosphoric and hydrochloric acids in the amounts 30 vol% sulfuric acid (96/98% purity), 20 vol% phosphoric acid (85% purity), 5 vol% hydrochloric acid (35/37% purity) and 45 vol% water. This process has been moderately successful on a small scale for the plating of articles made of polyacetal copolymers, but its implementation on an industrial scale was not satisfactory.

US Patent 4,826,565 discloses surface roughening of a molded polyacetal article by etching with an acid solution. It discusses surface roughening methods by adding to the polyacetal resin substances, such as metal carbonates, that can be dissolved out during the acid etch. These methods are reported to provide a desired surface processability, but advanced process control of etching conditions was required to obtain a product having superior surface characteristics. Moreover, the capacity of the etching solution reduced over time, the etching solution became contaminated, and this reduced the surface processability of the polyacetal article and adhesion of a plated layer to the article. US Patent 4,826,565 proposed to alleviate these problems by including additives in the etching solution, in particular thiourea. Tests were carried out with polyacetal resins containing 3% by weight of calcium carbonate with particle sizes from 0.01µ to 20µ, with and without added thiourea, in a mixed acid bath composed of a mixture of sulfuric and phosphoric acids. The addition of thiourea was found to lead to an improvement. No specific details of the polyacetal resins were given, apart from specifying that usual additives could be included.

Despite the difficulties encountered to date, it is extremely desirable to surface treat polyacetal articles in particular for applications where the surface appearance is important, while retaining good physico-mechanical properties of the polyacetal and with improved plating appearance. One particular application is metal-plated closure caps for perfume bottles, where polyacetal would be preferred to other plastics because of its outstanding mechanical performance, namely polyacetal's stiffness and toughness and, compared to amorphous polymers, its superior chemical resistance particularly to alcohol. However, closure caps for perfume bottles require a very good finish of the metal plating and this is difficult to achieve while retaining good resistance to chemical attack and good plating adherence.

As above described, there are at present many problems to be overcome in the plating of melt processed polyacetal resin products. In particular it has not to date been possible to produce a good quality perfume cap made of metal plated polyacetal. Instead, other plated amorphous polymers have been used in conjunction with an insert of, example, polyolefin.

### Summary of the Invention

The invention provides a polyacetal mixture for processing into a polyacetal article to be acid-etched and plated, whereby a high density of holes/pores can be created on the surface of a molded acetal article in order to offer an excellent mechanical anchorage for the deposition of a metallic layer during the plating process, so as to provide excellent final adhesion of the metallic layer and a surface with excellent aesthetic appearance. The holes/pores are created via a selected chemical etching during which an acid-soluble mineral filler in the polyacetal is dissolved, leaving holes/pores of a well controlled size distribution. Critical to this is the etching solution, the size and density of the holes (area covered by the holes) and the dispersion pattern of the holes (homogeneous). If the etching is too severe, and hence generates a high density of big holes, or if the size of the particles is too large with a poor dispersion pattern and a wide size distribution, an unacceptable surface will result that, when plated, will exhibit poor surface aesthetic and/or weak adhesion. The challenge is then to sufficiently etch the surface in order to create mechanical anchorage points to develop sufficient adhesion without harming the surface aspect.

The invention provides in one main aspect a polyacetal mixture for processing into a polyacetal article to be acid-etched and plated, the mixture comprising a polyacetal resin blend comprising 97 - 99.9wt% polyacetal and 0.1. - 3wt% of semicrystalline or amorphous thermoplastic non-polyacetal resin of molecular weight 5,000 - 50,000; and acid-soluble particles from the group selected from carbonates, phosphates, sulfates, acetates, silicates of at least one metal from Group II of the periodic table of elements, said acid-soluble particles being present in an amount from 2 to 6% by weight of the polyacetal blend, at least 98% of said acid-soluble particles being in the size range from 0.1 to 5 µm (micrometers), and acid-insoluble inorganic particles from the group consisting of glass powder, kaolin and silicates,

The polyacetal mixture according to the present invention is characterized by good processability, for instance, molding without the formation of defects in the produced product. Polyacetal articles produced from a mixture according to the invention are characterized by the absence of processing defects, in particular molding defects such as wrinkles, flow lines, splays or jetting marks, improved plateability (uniformity and adhesion), improved aspect rating (plating appearance), and good retained physico-mechanical properties, namely stiffness and toughness. The plated polyacetal articles are also characterised by an improved surface finish visually judged on the basis of the attenuation of a reflected image under a light source.

An important feature of the invention is that the resulting plated polyacetal articles maintain a consistently excellent aspect rating without compromising the plating adhesion or the polyacetal stability. The polyacetal articles obtained from the mixture according to the invention also have improved processability during acid etching and subsequent plating. The articles have a low reject rate when they are immersed into an acidic etching solution. The reject rate is the percentage of parts that break as a result of the acid etching or on which surface artifacts like the formation of cracks are observed (either during acid etching or during later processing steps).

The advantages of the polyacetal mixture, articles produced from the mixture, acid-etched articles and final plated polyacetal articles according to the invention are manifold:
i) Processing of the mixture into an article, as by molding, is improved and processing defects are substantially eliminated;
ii) Acid etching can be achieved in an all-acid bath (no additives) with a low reject rate (few etching defects), providing an etched surface with uniform small pores;
iii) The etched surface has a uniform distribution of many small pores with a very even distribution of pore size;
iv) Catalysation of the etched surface can be enhanced to improve plating catalyst adhesion and performance;
v) The resulting plated articles have a consistently excellent aspect rating;
vi) The applied plating has superior adherence; and
vii) Physical properties of the polyacetal are retained, in particular stability to chemical attack.

Apart from the polyacetal mixture to be processed, etched and plated, further aspects of the invention include ready-to-etch polyacetal articles produced from the mixture, etched polyacetal articles with a uniformly porous surface obtained by etching these articles and plated polyacetal articles obtainable by plating the acid-etched polyacetal articles with one or more of a plating catalyst, an electroless metal plating solution and a galvanic plating, preferably a combination of all three. Yet further aspects of the invention are a method of electroplating a polyacetal article and a method of preparing a particular polyacetal mixture to enhance the adhesion and the effect of an applied plating catalyst.

### Brief Description of the Drawings

In the accompanying drawings:
Figs. 1a and 1b are photographs showing typical surface artifacts observed on electroless nickel-plated polyacetal articles according to a comparative polyacetal formulation.
Fig. 1c is a corresponding photograph of an electroless nickel-plated polyacetal articles according to the invention.
Fig. 2a is a photograph showing non-uniform copper plating on three comparative molded polyacetal parts.
Fig. 2b is a corresponding photograph of a copper-plated polyacetal article produced according to the invention.
Fig. 3a is an SEM photograph of a molded and etched surface of a polyacetal formulation according to the invention.
Fig. 3b is an SEM photograph of a molded and etched surface of a comparative polyacetal formulation.
Fig. 4a is an SEM photograph of a copper plated surface of a comparative polyacetal formulation. Bands or marks present on Fig. 4a reduce the quality of the reflected images resulting in parts of less good surface appearance.
Fig. 4b is an SEM photograph of a copper plated surface of a polyacetal formulation according to the invention.

### Detailed Description

The invention provides polyacetal mixtures for processing into a polyacetal article to be acid-etched and plated to produce plated polyacetal articles with excellent visual aspect rating combined with good adherence and good retained physico-mechanical properties.

This invention relates to certain polyacetal compositions which after melt processing (as by injection molding) are subject to etching from a mixed acid bath containing at least three acids from the group sulfuric acid, phosphoric acid, hydrochloric acid and an organic acid and preferably containing the four acids sulfuric acid, phosphoric acid, hydrochloric acid and acetic acid. The polyacetal compositions contain minor amounts of functional modifiers (described below) which helps to retain the good appearance of the plated polyacetal and maintain the polyacetal's physical properties.

The required high performance (good adhesion, stiffness, toughness and surface aesthetic) is achieved using the resin composition, the surface treatment, and the applied plating process according to the present invention, as set out in greater detail below.

### Polyacetals

The term "polyacetal" as used herein includes homopolymers of formaldehyde or of cyclic oligomers of formaldehyde, the terminal groups of which are end-capped by esterification or etherification, and copolymers of formaldehyde or of cyclic oligomers of formaldehyde and other monomers that yield oxyalkylene groups with at least two adjacent carbon atoms in the main chain, the terminal groups of which copolymers can be hydroxyl terminated or can be end-capped by esterification or etherification.

The polyacetal used in the composition of the present invention can be branched or linear and will generally have a number average molecular weight in the range of 10'000 to 100'000, preferably 20'000 to 75'000. The molecular weight can be conveniently be measured by gel permeation chromatography in m-cresol at 160°C using a DuPont PSM bimodal column kit with nominal pore size of 60 and 100Å. Although polyacetals having higher or lower molecular weight averages can be used, depending on the physical and processing properties desired, the polyacetal molecular weight averages mentioned above provide for good mixing of the various ingredients to be melt blended into the composition and the most desired combination of physical properties in the molded articles made from such compositions.

As indicated above, the polyacetal can be either a homopolymer, a copolymer, or a mixture thereof. Copolymers can contain one or more comonomers, such as those generally used in preparing polyacetal compositions. Comonomers more commonly used include alkylene oxide of 2-12 carbon atoms and their cyclic addition product with formaldehyde. The quantity of comonomer will not be more than 20 weight percent, preferably not more than 15 weight percent, and most preferably about 2 weight percent. The most preferred comonomer is ethylene oxide. Generally polyacetal homopolymer is preferred over copolymer because of its greater stiffness and strength. Preferred polyacetal homopolymers include those whose terminal hydroxyl groups have been end-capped by a chemical reaction to form ester or ether groups, preferably acetate or methoxy groups, respectively.

Polyacetals are usually melt processed at a melt temperature of about 170°C-260°C, preferably 185°C-240°C and most preferably 200°C-230°C.

### Functional Modifiers

It has been found that polyacetals can be formulated in compositions having improved plateability and good retained physico-mechanical properties. By retained properties we understand that the deterioration of physico-mechanical properties compared to unmodified and/or untreated molded polyacetal parts is negligible, for example when tested under tensile as per ISO527/1-2 or under impact testing as per ISO 179/1 eA.

The "functional modifier" or "stabilizer"of the polyacetal is a semicrystalline or amorphous thermoplastic non-polyacetal resin that in general comprises at least one nitrogen containing organic material, and typically is a polyamide. The at least one semicrystalline or amorphous non-acetal thermoplastic polymer may be selected from those thermoplastic polymers that are generally used by themselves, or in combination with others, in extrusion and injection molding processes. These polymers are known to those skilled in the art as extrusion and injection molding grade resins, as opposed to those resins that are known for use as minor components (i.e., processing aids, impact modifiers, stabilizers) in polymer compositions.

It is critical to the present invention that the polyacetal mixture comprise about 0.1 to 3 weight percent, but no more, of at least one non-acetal thermoplastic polymer, however, 0.5 to 2 weight percent of the at least one non-acetal thermoplastic polymer is preferred. Greater amounts of the non-polyacetal thermoplastic polymer lead to a large size distribution of the pores in the etched polyacetal article and consequently to a poor surface aspect in the plated articles.

The functional modifier containing hydroxyl, carbonyl, methacrylate, amide, and/or amine groups and/or a combination thereof is meltable at the temperature at which the polyacetal is processed. By the term "meltable" it is meant that the functional modifier or a combination of different functional modifiers have a major melting point below the temperature at which the polyacetal is melt processed and hence are liquid and preferably of low viscosity and undergo significant melt flow at the processing temperature. Although it is almost impossible to quantitatively demonstrate a surface enrichment of the so-called "low melting point-low viscosity" functional modifiers it is presumed that the latter will migrate towards the surface during the molding process and hence have the functionality or functionalities present at or just below the so-called skin microstructure of the processed polyacetal part (as confirmed by ESCA measurement). Moreover, by adding these "low melting point-low viscosity" functional modifiers, cracking is reduced during acid etching with or without oxidizing solution. It seems that when the above mentioned functional modifier(s) is (are) added to the formulation, the internal or residual stresses are partially relaxed providing the processed polyacetal parts with enhanced mechanical performance.

For example, polyamides having relatively low melting points retain some level of crystallinity, but their low viscosity, high polarity and hydrogen bonding makes them useful for the purpose of the present invention. Polyolefins, preferably polar co- and ter-polymers such as ethylene-vinyl acetate copolymer (EVA) and ethylene butyl acrylate carbon monoxide terpolymer (EBACO), have proven useful to develop surface adhesion between a polyoxymethylene substrate and various surface treatments. Semi-crystalline polyesters with a melting point near or below that of polyacetal, such as polycaprolactone, may also be used. The non-acetal thermoplastic polymer can be incorporated into the composition as one thermoplastic polymer or as a blend of more than one thermoplastic polymer. Blends of the thermoplastic polymers may be used to adjust properties such as, for example, toughness or the compatibility of the major resin with the polyoxymethylene. Preferably, however, the substrate comprises one additional or alternative polymer such as an amorphous thermoplastic polymer or semi-crystalline polymer.

Whether it is incorporated as one thermoplastic polymer or as a blend of more than one, the weight percent of all non-acetal thermoplastic polymer(s) in the composition shall not exceed the weight percent ranges given above.

The term "thermoplastic" shall mean the polymer softens, when heated, to a flowable state in which under pressure it can be forced or transferred from a heated cavity into a cool mold and upon cooling in the mold, it hardens and takes the shape of the mold. Thermoplastic polymers are defined in this manner in the Handbook of Plastics and Elastomers (published by McGraw-Hill).

The term "amorphous," shall mean the polymer has no distinct crystalline melting point, nor does it have a measurable heat of fusion (although with very slow cooling from the melt, or with of sufficient annealing, some crystallinity may develop). The heat of fusion is conveniently determined on a differential scanning calorimeter (DSC). A suitable calorimeter is the DuPont Company's 990 thermal analyzer, Part Number 990000 with cell base II, Part Number 990315 and DSC cell, Part Number 900600. With this instrument, heat of fusion can be measured at a heating rate of 20°C per minute. The sample is alternately heated to a temperature above the anticipated melting point and cooled rapidly by cooling the sample jacket with liquid nitrogen. The heat of fusion is determined on any heating cycle after the first cycle should be a constant value within experimental error. Amorphous polymers are defined herein as having a heat of fusion, by this method, of less than 1 cal/g. For reference, semicrystalline 66 nylon polyamide with a molecular weight of about 17,000 has a heat of fusion of about 16 cal/g.

The thermoplastic polymers useful in the present compositions must be melt processible at the temperature at which the polyoxymethylene is melt processed. Polyoxymethylene is normally melt processed at melt-temperatures of about 170°C - 260°C, preferably 185°C - 240°C, and most preferably 200°C - 230°C.

The term "melt processible" shall mean that the thermoplastic polymer must soften or have a sufficient flow such that it can be melt compounded at the particular melt processing temperature for the polyoxymethylene.

The minimum molecular weight of the thermoplastic polymer (1000) is required in order to ensure compatibility, thermal stability and retain mechanical performance via entanglement of the chains, provided that the polymer has a degree of polymerization of at least ten and further provided that the polymer is melt processible (i.e., it flows under pressure) at the temperature at which the polyoxymethylene is melt processed. The maximum molecular weight of the thermoplastic polymer should not be so high that the thermoplastic polymer by itself would not be injection moldable by standard present techniques. The maximum molecular weight (50,000) for a polymer to be used for injection molding processes will vary with each individual, particular thermoplastic polymer. However, said maximum molecular weight for use in injection molding processes is readily discernible by those skilled in the art.

Amorphous or semi-crystalline thermoplastic polyamides that are useful herein are well known in the art. They are described in U.S. Pat. No. 4,410,661. Specifically, these amorphous or semi-crystalline thermoplastic polyamides are obtained from at least one aromatic dicarboxylic acid containing 8-18 carbon atoms and at least one diamine selected from the class consisting of: (i) 2-12 carbon normal aliphatic straight-chain diamine, (ii) 4-18 carbon branched aliphatic diamine, and (iii) 8-20 carbon cycloaliphatic diamine containing at least one cycloaliphatic, preferably cyclohexyl, moiety, and wherein optionally, up to 50 weight percent of the polyamide may consist of units obtained from lactams or omega-aminoacids containing 4-12 carbon atoms, or from polymerization salts of aliphatic dicarboxylic acids containing 4-12 carbon atoms and aliphatic diamines containing 2-12 carbon atoms.

The term "aromatic dicarboxylic acid", shall mean that the carboxy groups are attached directly to an aromatic ring, such as phenylene naphthalene.

The term "aliphatic diamine", shall mean that the amine groups are attached to a nonaromatic-containing chain such as alkylene.

The term "cycloaliphatic diamine", shall mean that the amine groups are attached to a cycloaliphatic ring composed of 3-15 carbon atoms. The 6 or 12 carbon cycloaliphatic rings are preferred.

Preferred examples of thermoplastic polyamides include those with melting point less than about 180°C, including co- and terpolymers of nylon 6, 610, 612. Polyamides are defined as being polymerized out of cyclic monomers (e-caprolactam for instance) and/or diamine/diacide for example hexamethylenediamine and adipic acid, including but not limited to nylons 6, 10, 11, 12, 46, 66, 69, 610, 612, 1212, and 6T. Polyamides include various copolymers, terpolymers, tetrapolymers and interpolymers made by condensing one or more dicarboxylic acids with one or more diamines; the condensation polymers of monoaminocarboxylic acides; and the polymers of lactams.

The amorphous or semi-crystalline thermoplastic polyamides exhibit melt viscosities at 200°C of less than 50,000 poise, preferably less than 20,000 poise measured at a shear stress of 105 dynes/cm². The amorphous or semi-crystalline polyamides are commercially available or can be prepared by known polymer condensation methods in the composition ratios mentioned above. In order to form high polymers, the total moles of the diacids employed should approximately equal the total moles of the diamines employed.

In addition free dicarboxylic acids, derivatives thereof, such as the chlorides, may be used to prepare the thermoplastic polyamide.

The polymerization to prepare the amorphous or semi-crystalline thermoplastic polyamides may be performed in accordance with known polymerization techniques, such as melt polymerization, solution polymerization and interfacial polymerization techniques, but it is preferred to conduct the polymerization in accordance with the melt polymerization procedure. This procedure produces polyamides having high molecular weights. In the polymerization, diamines and acids or cylic amides are mixed in such amounts that the ratio of the diamine components and the dicarboxylic acid components will be substantially equimolar. In melt polymerization the components are heated at temperatures higher than the melting point of the resulting polyamide but lower than the degradation temperature thereof. The heating temperature is in the range of about 170°C to 300°C. The pressure can be in the range of vacuum to 300 psi (approximately 2 MPa). The method of addition of starting monomers is not critical. For example, salts of combinations of the diamines and acids can be made and mixed. It is also possible to disperse a mixture of the diamines in water, add a prescribed amount of a mixture of acids to the dispersion at an elevated temperature to form a solution of a mixture of nylon salts, and subject the solution to the polymerization.

If desired, a monovalent amine or, preferably, an organic acid, may be added as viscosity adjuster to a mixture of starting salts or an aqueous solution thereof.

Functional modifiers having an OH group are defined by polymers having vinyl alcohols and/or phenolic groups and/or other hydroxyl containing co-interpolymers (interpolymers meaning 2,3,4 or more monomeric units).

The functional modifier can be an acrylate or methylacrylate (MA) which may contain hydroxyl groups, amide, imide, carboxylic acid and or salts thereof and combinations with less reactive or less functional monomers such as sytrene, methyl methacrylate, methylacrylate, ethylacrylate, butylacrylate, glicidyl methacrylate, hydroxy ethyl methacrylate. The polymer stabilizer used in the compositions can be a homopolymer or copolymer containing formaldehyde-reactive nitrogen groups, formaldehyde reactive hydroxyl groups, or both formaldehyde reactive nitrogen and formaldehyde reactive hydroxyl groups. By "formaldehyde reactive" it is meant that the hydroxyl group contains an oxygen with a hydrogen atom bonded to it and the nitrogen group contains a nitrogen with one or two hydrogen atoms bonded to it. Formaldehyde will react with the -OH or the -NH bonds of the stabilizer polymer. These reactive sites are referred to herein as formaldehyde reactive sites. It is preferred that the polymer stabilizer contain formaldehyde reactive nitrogen or hydroxyl groups having the maximum number of formaldehyde reactive sites. For example, a polymer stabilizer containing formaldehyde reactive nitrogen groups wherein there are two hydrogen atoms attached directly to the nitrogen atom is preferred over one containing formaldehyde reactive nitrogen groups wherein there is only one hydrogen atom attached directly to the nitrogen atom.

### The Acid-Soluble Particulate Additive

The polyacetal mixtures of the invention contain particles of a salt of a metal belonging to Group II of the Periodic Table which facilitate, by removal of the salt during acid-etching, the formation of a uniformly microporous roughened surface. The roughened surface, in turn, facilitates surface processing, in particular the application of a plating catalyst followed by an electroless metal plating solution and a galvanic process.

The acid-soluble particulate additive can be selected from carbonates, phosphates, sulfates, acetates, silicates of at least one metal from Group II of the periodic table of elements, most usually calcium and magnesium. The preferred acid-soluble particles are made of calcium carbonate. These particles may be coated or not with a dispersive agent such as a stereate.

These acid-soluble particles are present in an amount from 2 to 6% by weight of the polyacetal blend, at least 98% of said acid-soluble particles being in the size range from 0.1 to 5 micrometers. Preferably the acid-soluble particles are present in an amount from 3 to 5% by weight of the polyacetal blend, and at least 98% (usually 99%) of the acid-soluble particles are in the size range from 0.1 to 2 micrometers. In the latter case, the average primary particle size of the acid-soluble particles is about 0.7 micrometers. These particles are compatible with the polyacetal resin without degrading it and the given size range results in an optimum dispersion with a well controlled size distribution.

As demonstrated below, by using acid-soluble particles in this narrow size distribution in combination with the polyacetal blend with below 3% of the non-polyacetal modifier, the etched molded polyacetal articles demonstrate a very fine and uniform microporosity leading to superior surface aspect of the plated articles, while retaining good plating adhesion and a good resistance of the polyacetal to chemical attack.

### The Acid-Insoluble Particulate Additive

The polyacetal mixture according to the invention further includes an acid-insoluble inorganic particulate additive selected from glass powder, kaolin and silicates, preferably fumed silica. These acid insoluble particles, in particular fumed silica, are present in an amount from 1/5 to 1/50 the weight of the acid-soluble particles, the size of the acid-insoluble particles being from 1/20 to 1/100 the size of the acid-soluble particles.

When the acid-soluble particles are present in a preferred amount from 3% to 5% by weight, the acid-insoluble particles are present in a preferred amount from 0.1% to 0.5%, both by weight of the polyacetal blend.

The acid-insoluble particles are considerably smaller than the acid-soluble particles. Preferably, the acid insoluble particles are in the size range from 5 to 40 nanometers, and more preferably 10 to 20 nanometers (primary non-agglomerated particle size). These particles are further characterized by a high specific surface ranging from 100 to 300 m²/g, preferably from 175 to 225 m²/g.

The function of these acid-insoluble particles, is to enhance the activity and the effect of an applied plating catalyst such as palladium. Thus, the fumed silica is added in order to improve the deposition of the catalyst into the holes (mechanical anchorage sites) created by the acid etching. It is thought that after the chemical etching dissolves the carbonate particles, the tiny silica particles are revealed at the surface and will favor the plating catalysation. As a main effect, the adhesion is improved and the metallic plated layer is built up in a more homogeneous way providing an outstanding surface aesthetic as demonstrated below by the examples according to the invention.

When a polyacetal article is molded from a mixture containing acid-soluble and acid-insoluble particles, the molded polyacetal article comprises the acid-soluble particles uniformly distributed in the polyacatal surface, and acid-insoluble particles anchored in the polyacetal blend around the surfaces of the acid-soluble particles. In an acid-etched polyacetal article obtained by acid etching this molded polyacetal article, the acid soluble particles are removed, leaving the acid-insoluble particles individually or as agglomerates believed up to a maximum size of hundreds of nanometers, anchored in the polyacetal blend around open pores left by the removal of the acid soluble particles.

### Further Components of the Polyacetal

The polyacetal resins are normally free of other inorganic fillers but the mixture of the present invention may include, in addition to the polyacetal with the limited amount of the stabilizer polymer, and the aforementioned acid-soluble and acid-insoluble particles, other ingredients, modifiers and additives as are generally used in polyacetal molding resins, including anti-oxidants, pigments, colorants, UV stabilizers, toughening agents, nucleating agents, and fillers.

### Melt Processing

The polyacetal mixtures are melt processed by any of the techniques commonly used with thermoplastic materials, e.g. compression molding, injection molding, extrusion, blow molding, rotational molding, melt spinning, stamping and thermoforming.

As mentioned above, the viscosity of the polyacetal base resin plays an important role during the molding phase where intensive shear usually at the gate location, could negatively impact the surface finish. Apart from the design conception and the rules to be applied when molding a semicrystalline engineering polymer like a polyacetal resin, a low viscosity resin favors the homogeneous dispersion of the filler and is less prone to defect generation at the gate. Moreover, if the wall thickness of the part is rather small, a low viscosity resin (melt flow index about 20 to 40 gram/10 minutes, ISO 1133) will also give better results with fewer defects. Similar considerations apply for the other melt processing methods.

Choice of the composition of the polyacetal blend and its additives according to the invention as claimed contributes substantially to reducing unwanted artifacts in the transformed articles. In order to avoid surface defects, the viscosity of the polyacetal blend should be selected to ensure adequate processing as by molding. For this, the melt-flow index measured as per ISO 1133 at 190°C under 2.16kg should be from 2 to 40 gram/10 minutes, preferably 20 to 30 gram/10 minutes, in particular for molding parts having a small wall thickness from about 0.5 to 5 mm.

The viscosity of the polyacetal base resin plays an important role not only in the dispersion of the mineral filler during the compounding phase but also during the molding phase where intensive shear, usually at the gate location of the mold, could negatively impact the surface finish. At the gate, the shear is generally at a maximum so this is where molding defects are most likely to be generated. A low viscosity resin will usually favor the homogeneous dispersion of the filler and is less prone to defect generation at the gate. Moreover, if the wall thickness of the part is rather small, a low viscosity resin will also give better results with fewer defects.

### Acid Etching

The surface of the polyacetal to be plated is treated by etching from a mixed acid bath containing at least three acids from the group sulfuric acid, phosphoric acid, hydrochloric acid and an organic acid, in particular from a mixed acid bath containing sulfuric acid, phosphoric acid, hydrochloric acid and acetic acid. A mixed acid etching bath of the following composition, given by way of example, was prepared for the comparative testing reported below: sulfuric acid 34.5 weight%; phosphoric acid 29.0 weight%; hydrochloric acid 4.5 weight%; acetic acid 8.5 weight% and water 23.5 weight%. In this example the weight ratio of sulfuric to phosphoric acid is 1.18 and the weight ratio of hydrochloric to acetic acid is 0.52.

If such surface treatments are applied to a polyacetal article that does not contain the functional modifier(s), problems arise such as deterioration of the polyacetal resin throughout the whole body, leading to loss of strength and the formation of cracks.

On the other hand, if the treatment is carried out utilizing a polyacetal having suitable functional modifiers, the surface modification can be achieved while preventing or reducing deterioration of the polyacetal article which maintains good physico-mechanical properties, and leads to improved adherence of the plated metal.

The presence of the acid-soluble particles contributes to the development of a uniform surface microporosity for providing a mechanical anchorage for the plating precursors and metal platings. By working within the herein defined limits, this microporosity provides a surface with an excellent aesthetic appearance.

### Etching and Plating of the Polyacetal Articles

The molded polyacetal articles to be plated are cleaned by dipping them in a cleaner bath at weak alkaline pH and with a surfactant (such as PM 900 available from Shipley SAS of Paris, France), at a temperature up to 50°C for 2 to 3 minutes, and then rinsed with water prior to etching.

Etching in the mixed acid bath as described above is conveniently at 25 to 35°C for 10 to 30 minutes. Colder conditions require a longer treatment. The solution can be stirred to uniformize etching of the polyacetal surface. During etching, fumes are exhausted for safety and air control.

After removal from the etching bath, the articles are subjected to a rinse in water where acid drag-out can be recovered by reverse osmosis. The articles are then neutralized either with a 20ml/l ammonium solution or a 10g/l sodium hydroxide solution, both at room temperature for a duration of 1 approximately minute while stirring. The articles are then rinsed with water and, prior to electroless plating, are dipped in a solution of 10% HCI at room temperature for 1 minute.

The surfaces are then catalyzed with a palladium colloid, for instance catalyst 9F available from Shipley SAS, in a solution containing 50 to 100 ppm of palladium at a temperature of 25 to 28°C for 1 to 5 minutes. As is known in the art, when a different catalyst is used the conditions are adjusted: for example the treatment is at a temperature of 35-40°C for catalyst DP, available from Shipley SAS. This treatment is carried out with mechanical agitation or stirring.

The articles are then rinsed again with water and treated with an accelerator such as the formulation PM 964 from Shipley SAS, to remove stannous compounds and enhance the catalytic power of the palladium. This treatment takes place at 40 to 45°C for 2 to 4 minutes or longer if necessary, and is followed by another water rinse.

The articles are next immersed in an electroless nickel plating bath such as the bath PM 980 available from Shipley SAS, at a concentration of 70% or 2.4 g/l of nickel and at a temperature of 25 to 35°C while maintaining a pH of 8.8 to 9 by the addition of ammoniac. A duration of 8 to 12 minutes provides a nickel layer of 0.25 to 0.3 micron. The quality of the electroless nickel deposit can be inspected using a magnifying glass, and the conditions adjusted as necessary.

The articles with the electroless nickel plating are ready for galvanoplating for example with nickel using a conventional Watts bath, or with chromium also using a conventional bath. Alternatively, the electroless nickel coating can be replaced by an electroless copper coating, followed by galvanoplating with nickel, chromium or any other metal. For direct plating, the samples previously treated in catalyst DP and in an accelerator, as described above, are immersed in a depassivating solution such as 5 weight% sulfuric acid and then directly coated with a regular electroplating.

During long-term operation, the etching bath is periodically checked, e.g. by measuring its specific gravity each day. Fresh concentrated acids are added periodically to compensate for "drag-out" losses. The contamination of the bath with metals from the associated jigs (stainless steel and copper or nickel) is measured periodically, say each month.

Elimination of the dissolved calcium carbonate is negligible in the sense that the majority of the salts formed during the acid-etch are washed out during the rinsing phase and hence drag out of the etching bath. This effect is enhanced by the selection of the four-acid bath which produces multiple soluble salts, like for instance calcium acetate having with a low propensity to precipitate. Compared to the prior art etching bath of FR-A-2,703,074, the etching bath can be operated at lower temperatures for the same or a longer treatment period leading to a higher flexibility/tolerance (wider processing window) in the process and/or a better control of the treated articles, when operated at the same temperature.

### Comparative Tests

Parts, namely bottle caps intended for bottles containing perfume were injection molded using commercial non-modified or modified polyacetal resins, as specified below. All parts were subjected to the above-described surface treatment in a mixed acid etching bath as described above.

Different evaluation criteria were selected in order to qualify the quality of the treated parts. Among them we have moldability, adhesion and surface finish or aesthetic.

By moldability is meant the level of surface finish obtained after molding a representative part. In the present case, perfume caps were molded having a rather small wall thickness (0.8mm). An optimum molded part has to be free of any surface defects like for instance, but not limited to, wrinkles, flow lines, splays, pitting or jetting marks. A way to qualify the moldability is to observe the surface finish of the molded etched parts after immersion in the electroless Nickel.

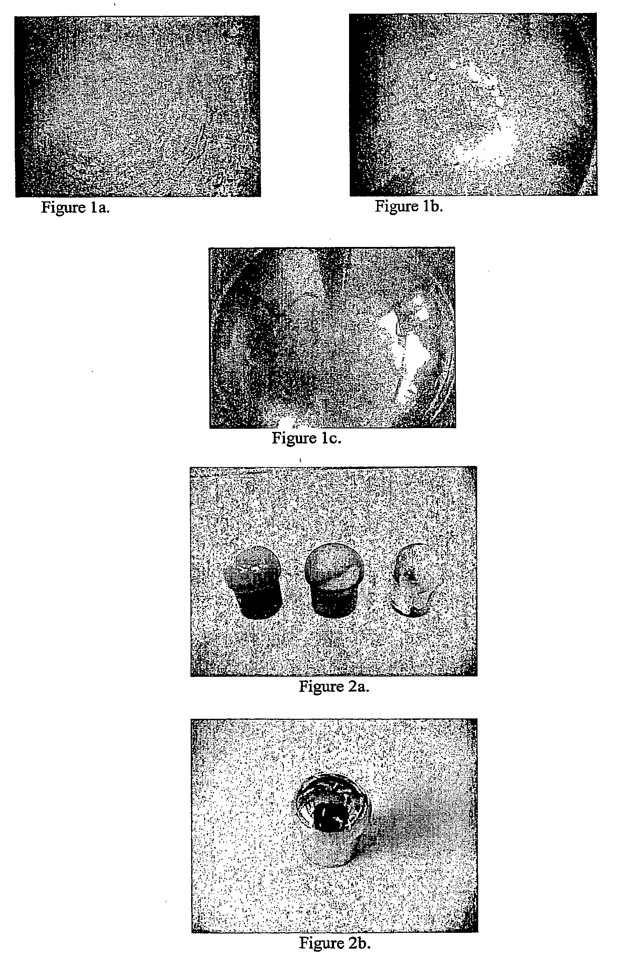

Figure 1a is representative of a bad molded etched part after immersion in the electroless Ni where wrinkles are observed at the gate location. These wrinkles are typically generated when using high viscosity acetal base resin and/or too low injection speed. There are also accentuated by a small gate size.

Figure 1 b, on the other hand, shows jetting marks or highly sheared bands, typically observed in too highly loaded formulations, more specifically containing 10% or more of mineral filler like calcium carbonate. These markings, typically, will result in a non homogeneous adhesion of the plated layer and to some extent also to an non uniformity of the surface finish.

Figure 1 c shows a corresponding photograph of a molded part according to the invention, coated with elecroless nickel. The surface is devoid of the above-described defects, namely wrinkles and jetting marks. The observed surface is homogenous and defect-free. Any defects observed at this stage would usually lead to accentuated defects in the later processing.

The uniformity of the plating treatment can be evaluated by visual inspection. The molded parts, after being immersed into the electroless Nickel have to be uniformly coated by the chemical Nickel. Figure 2a shows bad parts where the white marks correspond to the non-coated area. The origin of these marks could be manifold but those shown are a consequence of a poor dispersion of the mineral filler and/or linked to inhomogeneities in the microstructure generated during the compounding and molding process using composition ranges outside those claimed.

Figure 2b shows a corresponding photo of a molded copper-plated part according to the invention showing an excellent DOI (distinctness of image) meaning an excellent reflection of an image with low attenuation of details. Additionally, it has a good adhesion of the copper plate while retaining the surface appearance and chemical inertness.

The adhesion is measured according to the ISO standard 2409. A rating of 0 is excellent whereas 5 is representative of a weak adhesion. In the case of Figure 2a, the adhesion was not uniform, including value 5 where no coating is present. In the case of Figure 2b, the adhesion rating is 0 to 1 (excellent).

The surface finish or aesthetic. The quality of the surface after immersion in the galvanic copper is carefully observed and the distinctness of image (DOI) evaluated. Under the light, the reflection of the image has to be optimal with a minimum loss of details. The specimens of Figure 2a are too poor for assessments by this test.

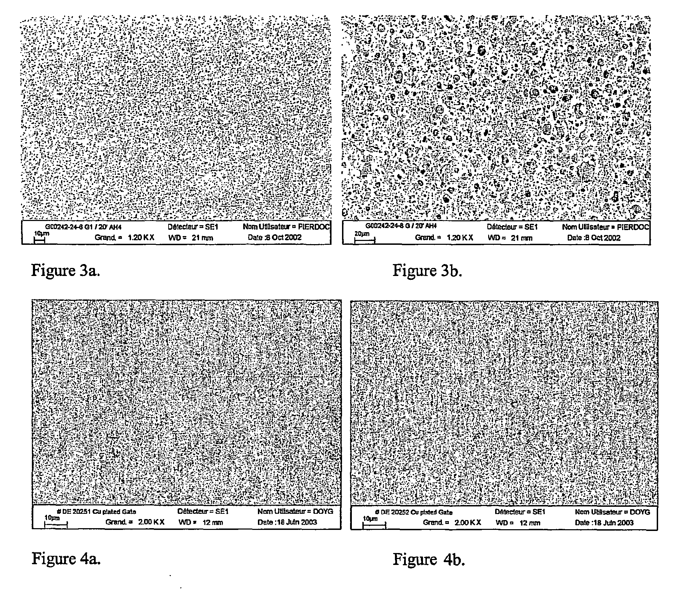

Figures 4a and 4b are SEM observations respectively of a copper plated surface of a comparative polyacetal formulation and a polyacetal formulation according to the invention. Marks or bands revealed in Figure 4a are the consequence of a poor leveling of the successive metal layers leading to a poor surface aesthetic. On the other hand, Figure 4b looks homogeneous with no artefacts visible on the surface mirroring, giving rise to the improved surface appearance of the copper plated surface according to the present invention.

Different experiments were performed varying the viscosity of the acetal base resin, the amount of stabiliser, the type and amount of mineral filler and the amount of fumed silica.

When testing formulations that do not contain any mineral filler, a good surface finish may be obtained but with no adhesion at all.

For polyacetal formulations with different CaCO₃ size distributions, when increasing the average primary size particle of the filler from 0.7 up to 15 µm (microns), the aspect was negatively impacted with the apparition of intensive pitting on the parts. Best results were obtained with a calcium carbonate having a narrow size distribution and most preferably having a primary size particle of 0.7µm (micron) in average with a top cut at 2 microns which means that 99% of the particle have a size below 2 microns.

Acetal formulations with the preferred CaC0₃ content and size distribution were also tested with different levels of the polyacetal stabilizer.

Figures 3a and 3b are SEM observations of the surface of a molded part obtained after the preferred acid etching (20min). Both micrographs were obtained from formulations having a similar content of calcium carbonate ("superPflex 200" available from Specialty Minerals Inc.) but different amounts of stabiliser and fumed silica. Figure 3a is representative of a formulation having a low level of stabiliser (0.8%) whereas Figure 3b is representative of a higher level of stabiliser (5%). As shown in Figure 3b, an increase of the level of stabiliser up to 5% is harmful to the surface aesthetic with as a main consequence the formation of big holes/pores that will not be uniformly coated by the metal plate.

Surface analysis were performed using the SEM micrographs of Figures 3a and 3b. The average size of the holes/pores on Figure 3a is 1.7 µm (micron) and the maximum is 5.6 µm (microns). The size distribution of the holes is narrow conferring to the parts an optimum between surface aspect and adhesion of the plated layer. In Figure 3a, the total hole count was 2337 and the holes/pores covered 4% of the surface.

On the contrary, for the sample of Figure 3b the size distribution is much wider with a mean size particle of 2.8 µm (micron) and a maximum of 21.4 µm (microns) As a result of the large particles size, pitting on the surface is observed. The size distribution of the holes is wide. In Figure 3b, the total hole count was 2599 and the holes/pores covered 15% of the surface. This sample led to a plated article with acceptable adhesion but poor surface aesthetics.

The best embodiments of tested modified polyacetal articles offering an improved surface processability for plating contain or include :
a) An acid-soluble mineral salt of Group II metals of the Periodic Table of Elements, preferably calcium carbonate having a relatively small size particle in average, in the range 0.1 to 5 µm (microns) and most preferably 0.1 to 2 µm (microns) with 99% of the particles being inferior to 2 µm (microns) (narrow size distribution).
b) An acid-insoluble inorganic compound consisting of highly dispersed fumed silica having an average primary size particle of about 12-15 nanometers (well below 100nm) added at a level of 0.1 to 1% and preferably in the range 0.15 to 0.5%.
c) Acid etching as described above with a mixed acid bath containing sulfuric acid, phosphoric acid, hydrochloric acid and acetic acid

These results clearly show that the beneficial effects of the invention are obtained only for the modified polyacetals subjected to whose parameters are selected according to the claimed invention.

## Claims

1. A polyacetal mixture for processing into a polyacetal article to be acid-etched and plated comprising:
- a polyacetal resin blend comprising 97 - 99.9wt% polyacetal and 0.1 - 3wt% of semicrystalline or amorphous thermoplastic non-polyacetal resin of molecular weight 5,000 - 50,000;
- acid-soluble particles from the group selected from at least one salt of at least one metal from Group II of the periodic table of elements, said acid-soluble particles being present in an amount from 2 to 6% by weight of the polyacetal blend, at least 98% of said acid-soluble particles being in the size range from 0.1 to 5 µm (micrometers); and
- acid-insoluble inorganic particles from the group consisting of glass powder, kaolin and silicates.

2. The polyacetal mixture of claim 1, wherein said acid-insoluble particles are fumed silica.

3. The polyacetal mixture of claim 1 or 2, wherein said acid-insoluble particles are present in an amount from 1/5 to 1/50 the weight of the acid-soluble particles, the average primary particle size of the acid-insoluble particles being from 1/20 to 1/100 the size of the acid-soluble particles.

4. The polyacetal mixture of claim 1, 2 or 3, wherein the acid-soluble particles are present at an amount from 3 wt% to 5 wt% and the acid insoluble particles are present in an amount from 0.1 wt% to 0.5 wt%, both by weight of the polyacetal blend.

5. The polyacetal mixture of any one of claims 1 to 4; wherein the acid-insoluble particles are in the size range from 5 to 40 nanometers (primary non-agglomerated particle size).

6. The polyacetal mixture of any one of claims 1 to 4, wherein the acid-insoluble particles are in the size range from 10 to 20 nanometers (primary non-agglomerated particle size).

7. The polyacetal mixture of any one of claims 1 to 6, wherein the acid insoluble particles have a high specific surface area ranging from 100 to 300 m²/g.

8. The polyacetal mixture of any one of claims 1 to 6, wherein the acid insoluble particles have a high specific surface area ranging from 175 to 225 m²/g.

9. The polyacetal mixture of any one of claims 1 to 8, wherein the polyacetal blend comprises 98 - 99.5wt% polyacetal and 0.5 - 2wt% of the semicrystalline or amorphous thermoplastic non-polyacetal resin.

10. The polyacetal mixture of claim 9, wherein the semicrystalline or amorphous thermoplastic non-polyacetal resin comprises at least one nitrogen containing organic material.

11. The polyacetal mixture of any preceding claim, wherein said acid-soluble particles are present in an amount from 3 to 5% by weight of the polyacetal blend, at least 98% of said acid-soluble particles being in the size range from 0.1 to 2 µm (micrometers).

12. The polyacetal mixture of any one of claims 1 to 11, wherein the acid-soluble particles are made of calcium carbonate.

13. A polyacetal article to be acid etched and plated, produced from a polyacetal mixture according to any preceding claim, the polyacetal article comprising at its surface said acid-soluble particles in the polyacetal blend.

14. The polyacetal article of claim 13, which further comprises acid-insoluble particles smaller than the acid-soluble particles, the acid-insoluble particles being anchored in the polyacetal blend around the surfaces of the acid-insoluble particles.

15. An acid-etched polyacetal article obtainable by acid etching of the polyacetal article of claim 14 to remove the acid-soluble particles, leaving the acid-insoluble particles anchored in the polyacetal blend around open pores left by the removal of the acid-soluble particles.

16. A plated polyacetal article obtainable by plating the acid-etched polyacetal article of claim 15 with at least one of: a plating catalyst, an electroless metal plate and a galvanoplate.

17. A method of electroplating a polyacetal article, which comprises:
- producing from the mixture as claimed in any one of claims 1 to 12 a polyacetal article wherein the acid-soluble particles are present at the article surface,
- acid etching the polyacetal article to remove the acid-soluble particles,
- applying a plating catalyst to the etched surface,
- applying an electroless metal plating,
- applying a galvanoplating.

18. The method of claim 17, wherein the acid-insoluble inorganic particles are present in an amount for 1/5 to 1/50 the weight of the acid-soluble particles, the average primary particle size of the acid-insoluble particles being from 1/20 to 1/100 the size of the acid-soluble particles, and wherein said acid-insoluble particles are present on the surfaces of pores in the etched polyacetal article formed by removal of the acid-removable particles.

19. The method of claim 18, wherein the acid-insoluble particles are fumed silica.

20. The method of claim 17, 18 or 19, wherein the polyacetal article is etched in a mixed acid bath containing at least three acids selected from sulfuric acid, phosphoric acid, hydrochloric acid and acetic acid, in particular containing all four said acids.

21. The method of any one of claims 17 to 20, wherein the polyacetal article is provided by molding, extrusion or thermoforming.

22. A method of preparing a polyacetal mixture, the method comprising:
- preparing a polyacetal blend by blending a polyacetal resin with semicrystalline or amorphous thermoplastic non-polyacetal resin of molecular weight 5,000 - 50,000, in the amounts 97- 99.9wt% of the polyacetal resin and 0.1-3 wt% of the non-polyacetal resin;
- preparing a mixture of-acid-soluble particles and acid-insoluble particles, the acid-soluble particles being selected from at least one salt of at least one metal from Group II of the periodic table of elements, the acid-insoluble particles being selected from the group consisting of glass powder, kaolin and silicates, at least 98% of said acid-soluble particles being in the size range from 0.1 to 5 micrometers, said acid-insoluble particles being present in an amount from 1/5 to 1/50 the weight of the acid-soluble particles, the size of the acid-insoluble particles being from 1/20 to 1/100 the size of the acid-soluble particles; and
- mixing said mixture of particles into the polyacetal blend wherein said acid-soluble particles are present in an amount from 2 to 6% by weight of the polyacetal blend.

## Patentansprüche

1. Polyacetalmischung für das Verarbeiten zu einem Polyacetalartikel, der säuregeätzt und plattiert werden soll, umfassend:
- eine Polyacetalharzmischung umfassend 97-99 Gew.-% Polyacetal und 0,1-3 Gew.-% halbkristallines oder amorphes thermoplastisches Nichtpolyacetalharz einer Molmasse von 5.000-50.000;
- säurelösliche Teilchen aus der Gruppe ausgewählt unter mindestens einem Salz mindestens eines Metalls der Gruppe II des Periodensystems der Elemente, wobei die säurelöslichen Teilchen in einer Menge von 2 bis 6 Gew.-% der Polyacetalmischung vorliegen, wobei mindestens 98% der säurelöslichen Teilchen im Größenbereich von 0,1 bis 5 µm (Mikrometern) liegen; und
- säureunlösliche anorganische Teilchen aus der Gruppe bestehend aus Glaspulver, Kaolin und Silikaten.

2. Polyacetalmischung nach Anspruch 1, wobei die säureunlöslichen Teilchen pyrogenes Siliciumdioxid sind.

3. Polyacetalmischung nach Anspruch 1 oder 2, wobei die säureunlöslichen Teilchen in einer Menge von 1/5 bis 1/50 des Gewichts der säurelöslichen Teilchen vorliegen, wobei die durchschnittliche primäre Teilchengröße der säureunlöslichen Teilchen 1/20 bis 1/100 der Größe der säurelöslichen Teilchen beträgt.

4. Polyacetalmischung nach Anspruch 1, 2 oder 3, wobei die säurelöslichen Teilchen in einer Menge von 3 Gew.-% bis 5 Gew.-% und die säureunlöslichen Teilchen in einer Menge von 0,1 bis 0,5 Gew.-%, beide auf das Gewicht der Polyacetalmischung bezogen, vorliegen.

5. Polyacetalmischung nach einem der Ansprüche 1 bis 4, wobei die säureunlöslichen Teilchen im Größenbereich von 5 bis 40 Nanometern (primäre nichtagglomerierte Teilchengröße) liegen.

6. Polyacetalmischung nach einem der Ansprüche 1 bis 4, wobei die säureunlöslichen Teilchen im Größenbereich von 10 bis 20 Nanometern (primäre nichtagglomerierte Teilchengröße) liegen.

7. Polyacetalmischung nach einem der Ansprüche 1 bis 6, wobei die säureunlöslichen Teilchen einen hohen spezifischen Oberflächenbereich im Bereich von 100 bis 300 m²/g aufweisen.

8. Polyacetalmischung nach einem der Ansprüche 1 bis 6, wobei die säureunlöslichen Teilchen einen hohen spezifischen Oberflächenbereich im Bereich von 175 bis 225 m²/g aufweisen.

9. Polyacetalmischung nach einem der Ansprüche 1 bis 8, wobei die Polyacetalmischung 98-99,5 Gew.-% Polyacetal und 0,5-2 Gew.-% des halbkristallinen oder amorphen thermoplastischen Nichtpolyacetalharzes umfasst.

10. Polyacetalmischung nach Anspruch 9, wobei das halbkristalline oder amorphe thermoplastische Nichtpolyacetalharz mindestens ein stickstoffhaltiges organisches Material umfasst.

11. Polyacetalmischung nach einem der vorhergehenden Ansprüche, wobei die säurelöslichen Teilchen in einer Menge von 3 bis 5 Gew.-%, auf die Polyacetalmischung bezogen, vorliegen, wobei mindestens 98% der säurelöslichen Teilchen im Größenbereich von 0,1 bis 2 µm (Mikrometern) liegen.

12. Polyacetalmischung nach einem der Ansprüche 1 bis 11, wobei die säurelöslichen Teilchen aus Calciumcarbonat bestehen.

13. Polyacetalartikel, der säuregeätzt und plattiert werden soll, hergestellt aus einer Polyacetalmischung nach einem der vorhergehenden Ansprüche, wobei der Polyacetalartikel an seiner Oberfläche die säurelöslichen Teilchen in der Polyacetalmischung umfasst.

14. Polyacetalartikel nach Anspruch 13, der des Weiteren säureunlösliche Teilchen umfasst, die kleiner sind als die säurelöslichen Teilchen, wobei die säureunlöslichen Teilchen in der Polyacetalmischung um die Oberflächen der säureunlöslichen Teilchen herum verankert sind.

15. Säuregeätzter Polyacetalartikel erhältlich durch das Säureätzen des Polyacetalartikels nach Anspruch 14 zum Entfernen der säurelöslichen Teilchen, wobei die säureunlöslichen Teilchen in der Polyacetalmischung um die offenen Poren, die durch das Entfernen der säurelöslichen Teilchen hinterlassen werden, verankert gelassen werden.

16. Plattierter Polyacetalartikel erhältlich durch Plattieren des säuregeätzten Polyacetalartikels aus Anspruch 15 mit mindestens einem von: einem Plattierkatalysator, einer stromlosen Metallplattierung und einer Galvanoplattierung.

17. Verfahren für das galvanische Beschichten eines Polyacetalartikels, das Folgendes umfasst:
- Herstellen der Mischung nach einem der Ansprüche 1 bis 12 eines Polyacetalartikels, wobei die säurelöslichen Teilchen an der Artikeloberfläche vorliegen,
- Säureätzen des Polyacetalartikels zum Entfernen der säurelöslichen Teilchen,
- Aufbringen eines Plattierkatalysators auf die geätzte Fläche,
- Aufbringen einer stromlosen Metallplattierung,
- Aufbringen einer Galvanoplattierung.

18. Verfahren nach Anspruch 17, wobei die säureunlöslichen Teilchen in einer Menge von 1/5 bis 1/50 des Gewichts der säurelöslichen Teilchen vorliegen, wobei die durchschnittliche primäre Teilchengröße der säureunlöslichen Teilchen 1/20 bis 1/100 der Größe der säurelöslichen Teilchen beträgt und wobei die säureunlöslichen Teilchen an den Oberflächen der Poren in dem geätzten Polyacetalartikel vorliegen, der durch Entfernen der säureentfernbaren Teilchen gebildet worden ist.

19. Verfahren nach Anspruch 18, wobei die säureunlöslichen Teilchen pyrogenes Siliciumdioxid sind.

20. Verfahren nach Anspruch 17, 18 oder 19, wobei der Polyacetalartikel in einem gemischten Säurebad geätzt wird, das mindestens drei Säuren enthält ausgewählt unter Schwefelsäure, Phosphorsäure, Salzsäure und Essigsäure, wobei es insbesondere alle vier Säuren enthält.

21. Verfahren nach einem der Ansprüche 17 bis 20, wobei der Polyacetalartikel durch Formen, Extrudieren oder Thermoformung bereitgestellt wird.

22. Verfahren zum Herstellen einer Polyacetalmischung, wobei das Verfahren Folgendes umfasst:
- Herstellen einer Polyacetalmischung durch Mischen eines Polyacetalharzes mit halbkristallinem oder amorphem thermoplastischem Nichtpolyacetalharz einer Molmasse von 5.000-50.000 in Mengen von 97-99,9 Gew.-% des Polyacetalharzes und 0,1-3 Gew.- % des Nichtpolyacetalharzes;
- Herstellen einer Mischung von säurelöslichen Teilchen und säureunlöslichen Teilchen, wobei die säurelöslichen Teilchen unter mindestens einem Salz von mindestens einem Metall der Gruppe II des Periodensystems der Elemente ausgewählt wird, wobei die säureunlöslichen Teilchen aus der Gruppe ausgewählt werden bestehend aus Glaspulver, Kaolin und Silicaten, wobei mindestens 98% der säurelöslichen Teilchen im Größenbereich von 0,1 bis 5 Mikrometern liegen, wobei die säureunlöslichen Teilchen in einer Menge von 1/5 bis 1/50 des Gewichts der säurelöslichen Teilchen vorliegen, wobei die Größe der säureunlöslichen Teilchen 1/20 bis 1/100 der Größe der säurelöslichen Teilchen beträgt; und
- Mischen der Mischung von Teilchen zu einer Polyacetalmischung, wobei die säurelöslichen Teilchen in einer Menge von 2 bis 6 Gew.-% der Polyacetalmischung vorliegen.

## Revendications

1. Mélange de polyacétal à transformer en un article de polyacétal devant être attaqué par un acide et plaqué, comprenant:
- un mélange de résine de polyacétal comprenant 97 à 99,9% en poids de polyacétal et 0,1 à 3% en poids de résine thermoplastique non polyacétal semi-cristalline ou amorphe d'un poids moléculaire de 5000 à 50000;
- des particules solubles dans un acide du groupe choisi parmi au moins un sel d'au moins un métal du groupe II du tableau périodique des éléments, lesdites particules solubles dans un acide étant présentes en une quantité de 2 à 6% en poids du mélange de polyacétal, au moins 98% desdites particules solubles dans un acide étant dans une gamme de taille de 0,1 à 5µm (micromètres); et
- des particules inorganiques insolubles dans un acide du groupe constitué par une poudre de verre, le kaolin et les silicates.

2. Mélange de polyacétal selon la revendication 1, dans lequel lesdites particules insolubles dans un acide sont de la silice pyrogénée.

3. Mélange de polyacétal selon la revendication 1 ou 2, dans lequel lesdites particules insolubles dans un acide sont présentes en une quantité de 1/5 à 1/50 du poids des particules solubles dans un acide, la taille moyenne de particule primaire des particules insolubles dans un acide étant de 1/20 à 1/100 de la taille des particules solubles dans un acide.

4. Mélange de polyacétal selon la revendication 1, 2 ou 3, dans lequel les particules solubles dans un acide sont présentes en une quantité de 3% en poids à 5% en poids et les particules insolubles dans un acide sont présentes en une quantité de 0,1% en poids à 0,5% en poids, les deux en poids du mélange de polyacétal.

5. Mélange de polyacétal selon l'une quelconque des revendications 1 à 4, dans lequel les particules insolubles dans un acide sont dans la gamme de taille de 5 à 40 nanomètres (taille de particule primaire non agglomérée).

6. Mélange de polyacétal selon l'une quelconque des revendications 1 à 4, dans lequel les particules insolubles dans un acide sont dans la gamme de taille de 10 à 20 nanomètres (taille de particule primaire non agglomérée).

7. Mélange de polyacétal selon l'une quelconque des revendications 1 à 6, dans lequel les particules insolubles dans un acide ont une surface spécifique élevée allant de 100 à 300 m²/g.

8. Mélange de polyacétal selon l'une quelconque des revendications 1 à 6, dans lequel les particules insolubles dans un acide ont une surface spécifique élevée allant de 175 à 225 m²/g.

9. Mélange de polyacétal selon l'une quelconque des revendications 1 à 8, le mélange de polyacétal comprenant 98 à 99,5% en poids de polyacétal et 0,5 à 2% en poids de la résine thermoplastique non polyacétal semi-cristalline ou amorphe.

10. Mélange de polyacétal selon la revendication 9, dans lequel la résine thermoplastique non polyacétal semi-cristalline ou amorphe comprend au moins une matière organique contenant de l'azote.

11. Mélange de polyacétal selon l'une quelconque des revendications précédentes, dans lequel lesdites particules solubles dans un acide sont présentes en une quantité de 3 à 5% en poids du mélange de polyacétal, au moins 98% desdites particules solubles dans un acide étant dans la gamme de taille de 0,1 à 2 µm (micromètres).

12. Mélange de polyacétal selon l'une quelconque des revendications 1 à 11, dans lequel les particules solubles dans un acide sont constituées de carbonate de calcium.

13. Article de polyacétal devant être attaqué par un acide et plaqué, fabriqué à partir d'un mélange de polyacétal selon l'une quelconque des revendications précédentes, l'article de polyacétal comprenant à sa surface lesdites particules solubles dans un acide dans le mélange de polyacétal.

14. Article de polyacétal selon la revendication 13, qui comprend en outre des particules insolubles dans un acide plus petites que les particules solubles dans un acide, les particules insolubles dans un acide étant ancrées dans le mélange de polyacétal autour des surfaces des particules insolubles dans un acide.

15. Article de polyacétal attaqué par un acide, susceptible d'être obtenu en attaquant par un acide l'article de polyacétal selon la revendication 14, pour éliminer les particules solubles dans un acide, laissant les particules insolubles dans un acide ancrées dans le mélange de polyacétal autour des pores ouverts laissés par l'élimination des particules solubles dans un acide.

16. Article de polyacétal plaqué susceptible d'être obtenu en plaquant l'article de polyacétal attaqué par un acide selon la revendication 15, avec au moins l'un parmi: un catalyseur de placage, une plaque de métal autocatalytique et une plaque de galvanoplastie.

17. Procédé de revêtement électrolytique d'un article de polyacétal, qui comprend:
- la production, à partir du mélange selon l'une quelconque des revendications 1 à 12, d'un article de polyacétal dans lequel les particules solubles dans un acide sont présentes à la surface de l'article,
- l'attaque par un acide de l'article de polyacétal pour éliminer les particules solubles dans un acide,
- l'application d'un catalyseur de placage sur la surface attaquée,
- l'application d'un placage de métal autocatalytique,
- l'application d'un placage galvanoplastique.

18. Procédé selon la revendication 17, dans lequel les particules inorganiques insolubles dans un acide sont présentes en une quantité de 1/5 à 1/50 du poids des particules solubles dans un acide, la taille moyenne de particule primaire des particules insolubles dans un acide étant de 1/20 à 1/100 de la taille des particules solubles dans un acide, et dans lequel lesdites particules insolubles dans un acide sont présentes sur les surfaces des pores dans l'article de polyacétal attaqué formé par élimination des particules éliminables par un acide.

19. Procédé selon la revendication 18, dans lequel les particules insolubles dans un acide sont de la silice pyrogénée.

20. Procédé selon la revendication 17, 18 ou 19, dans lequel l'article de polyacétal est attaqué dans un bain de mélange d'acides contenant au moins trois acides choisis parmi l'acide sulfurique, l'acide phosphorique, l'acide chlorhydrique et l'acide acétique, en particulier contenant tous lesdits quatre acides.

21. Procédé selon l'une quelconque des revendications 17 à 20, dans lequel l'article de polyacétal est fourni par moulage, extrusion ou thermoformage.

22. Procédé de préparation d'un mélange de polyacétal, le procédé comprenant:
- la préparation d'un mélange de polyacétal en mélangeant une résine de polyacétal avec une résine thermoplastique non polyacétal semi-cristalline ou amorphe d'un poids moléculaire de 5000 à 50000, en les quantités de 97 à 99,9% en poids de la résine de polyacétal et de 0,1 à 3% en poids de la résine non polyacétal;
- la préparation d'un mélange de particules solubles dans un acide et de particules insolubles dans un acide, les particules solubles dans un acide étant choisies parmi au moins un sel d'au moins un métal du groupe II du tableau périodique des éléments, les particules insolubles dans un acide étant choisies dans le groupe constitué par une poudre de verre, le kaolin et les silicates, au moins 98% desdites particules solubles dans un acide étant dans la gamme de taille de 0,1 à 5 micromètres, lesdites particules insolubles dans un acide étant présentes en une quantité de 1/5 à 1/50 du poids des particules solubles dans un acide, la taille des particules insolubles dans un acide étant de 1/20 à 1/100 de la taille des particules solubles dans un acide; et
- le mélange dudit mélange de particules dans le mélange de polyacétal dans lequel lesdites particules solubles dans un acide sont présentes en une quantité de 2 à 6% en poids du mélange de polyacétal.
